(19) Europäisches Patentamt

European Patent Office

Office européen des brevets

(11) **EP 2 806 394 A1**

(12) **EUROPEAN PATENT APPLICATION**

(43) Date of publication:
26.11.2014 Bulletin 2014/48

(51) Int Cl.:
*G06T 5/00* (2006.01)     *G06T 5/50* (2006.01)

(21) Application number: 13305673.9

(22) Date of filing: 23.05.2013

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicants:
• **bioMérieux**
**69280 Marcy-L'Etoile (FR)**
• **Commissariat à l'Énergie Atomique
et aux Énergies Alternatives
75015 Paris (FR)**

(72) Inventors:
• **Allano, Lorène**
**92310 Sèvres (FR)**
• **Kyrgyzova, Khrystyna**
**92330 Sceaux (FR)**

(74) Representative: **de Zeeuw, Johan Diederick**
**Murgitroyd & Company
Immeuble Atlantis
55, Allée Pierre Ziller
Sophia Antipolis
06560 Valbonne (FR)**

(54) **Method, system and computer program product for improving the quality of an image**

(57)     A method for correcting one or more images of an object (107) from a plurality of images of the object (107), for providing one or more corrected images of the object (107) for further use in a process for generating a representation of the surface of the object, each image of the plurality of images comprising one or more pixels and each pixel comprising a pixel value, wherein one or more illumination sources (104, 105, 106) illuminate the object with different directions of illumination, and each image is associated with a determined direction of illumination, the method comprising the steps of:

for each pixel of the plurality of a first image of said plurality of images:

a) selecting a pixel in the first image for obtaining the pixel value of the selected pixel;

b) selecting at least one corresponding pixel in at least one image of the remaining images of the plurality of images for obtaining the pixel value of the at least one selected corresponding pixel;

c) calculating at least one ratio of the pixel value of the selected pixel in the first image to each pixel value of the at least one selected corresponding pixel;

d) determining a requirement for pixel value correction of the selected pixel on the basis of the at least one calculated ratio;

e) calculating a value (W) based on the at least one calculated ratio to determine a corrected pixel value of the selected pixel;

f) replacing the pixel value of the selected pixel with the corrected pixel value in the first image to provide a corrected first image;

FIG. 13

## Description

### Field of the Invention

The present invention relates to a method, system and computer program product for improving the quality of an image, and more specifically for correcting an image by removing bright zones and dark zones within images.

### Background of the Invention

In the domain of image processing, the improvement of the quality of images is a well-known problem to be solved. Such improvement is required for many technical applications, such as biological applications. In the domain of biological analysis, in vitro analysis is carried out on a biological sample to identify the type of micro-organisms potentially present in the biological sample. Such analysis can be performed by associating the biological sample with a specific environment such as a specific growth medium. The specific environment can be located, for example, in a Petri dish. The specific environment is adapted to the biological sample to be analyzed to allow the growth of micro-organisms. The Petri dish comprising the biological sample and the specific environment is then put in an incubator to generate the growth of the micro-organisms.

After the incubation process, an analysis of the surface of the specific environment is performed to determine the type of micro-organisms that have grown in the Petri dish. The analysis comprises several steps, including illuminating the surface of the Petri dish with an imaging system as described in the published European application EP2520923. The imaging system comprises several illumination sources located around the biological sample. Each illumination source illuminates the biological sample from a different direction. A fixed position camera takes various images of a same surface of the Petri dish. A photometric stereo process is then applied to combine the data captured from the various images to provide a deepness map or a raised relief map of the surface of the Petri dish comprising objects such as micro-organisms. The type of micro-organisms on the surface of the Petri dish may then be identified by applying an automatic recognition process to the resulting images.

Due to the different illumination directions of the various illumination sources and the specific nature of the micro-organisms, bright zones, such as specular zones may appear. Bright zones correspond to high intensity pixels associated with a highlighted or specular zone in an image. During image processing procedures such as segmentation, object recognition and photometric stereo method, such bright and dark zones may cause a distortion effect on the corresponding outputs map. This distortion effect may lead to an incorrect representation of the surface object on the deepness map. As a result, the automatic recognition process may not be able to identify the correct type of micro organism associated with the objects located on the surface of the Petri dish.

In a similar manner, when considering an object having a determined height, other than the content of a Petri dish, dark zones may appear. During image processing procedures, such dark zones may also cause a distortion effect on the corresponding deepness map and thus lead to an incorrect representation of the object on the deepness map.

In the prior art, several methods for removing specular zones are disclosed. One of the methods comprises steps for identifying the specular zones within several images of a same object and then providing a single corrected image of the object where the pixels related to the specular zones are replaced with corrected pixel values.

However, in the present example, the multiple images of the object taken under different illumination directions must not be reduced after removing bright or dark zones. Indeed, each image of the object provides relevant information regarding the distribution of light on the object for further determination of the surface of the object during the photometric stereo process in order to identify the nature of the micro-organisms.

As a result, there is a need to improve the quality of the images of an object, each image being taken under different illumination conditions with a fixed position camera to prevent the occurrence of image distortion caused by bright and dark zones in such images, to retain the multiplicity of the images after improving the quality of the images and also to retain the distribution of intensity of illumination sources for each image.

### Objects of the Invention

It is an object of the present invention to overcome at least some of the problems associated with the prior art.

It is a further object of the invention to provide a method, system and computer program product to improve the quality of images to be used at least in a process for providing a raised relief map of an object such as a photometric stereo process.

### Summary of the Invention

The present invention provides a method, system and computer program product for providing corrected images of an object as set out in the accompanying claims.

According to a first aspect of the present invention, there is provided a method for correcting one or more images of an object from a plurality of images of the object, for providing one or more corrected images of the object for further use in a process for generating a representation of the surface of the object, each image of the plurality of images comprising one or more pixels and each pixel comprising a pixel value, wherein one or more illumination sources illuminate the object with different directions of illumination, and each image is associated with a determined direction of illumination, the method comprising the steps of:

for each pixel of the plurality of a first image of said plurality of images:

a) selecting a pixel in the first image for obtaining the pixel value of the selected pixel;

b) selecting at least one corresponding pixel in at least one image of the remaining images of the plurality of images for obtaining the pixel value of the at least one selected corresponding pixel;

c) calculating at least one ratio of the pixel value of the selected pixel in the first image to each pixel value of the at least one selected corresponding pixel;

d) determining a requirement for pixel value correction of the selected pixel on the basis of the at least one calculated ratio;

e) calculating a value (W) based on the at least one calculated ratio to determine a corrected pixel value of the selected pixel;

f) replacing the pixel value of the selected pixel with the corrected pixel value in the first image to provide a corrected first image;

Preferably, the method further comprises the step of repeating steps a), b), c), d), e) and f) for at least one image of the remaining non-corrected images to provide at least one further corrected image.

Preferably, the step of determining a corrected pixel value further comprises applying a determined mathematical formula which comprises a sigmoid function.

Preferably, the mathematical formula comprises a parameter determining the required level of pixel value correction.

Preferably, the mathematical formula comprises a parameter determining the sharpness of transition of the sigmoid function.

Preferably, the mathematical formula comprises a parameter for adapting the level of pixel value correction.

Preferably, the plurality of images comprises different types of zones such as bright zones and/or dark zones.

Preferably, the selected pixel is associated with a bright zone of an image.

Preferably, the selected pixel is associated with a dark zone of an image.

Preferably, the step of determining a corrected pixel value depends on the type of zone associated with the selected pixel.

Preferably, each of the one or more initial images comprises the three color channels Red, Green, Blue and wherein steps a), b), c), d) and e) are iteratively carried out for each pixel, for each image and for each color channel.

According to a second aspect of the present invention, there is provided a computer program product comprising stored computer-executable instructions which, when executed by a computer system, implement the method of the present invention.

According to a third aspect of the present invention, there is provided an imaging system for correcting a plurality of images of an object to provide corrected images of the object for further use in a process for generating a representation of the object, each image of the plurality of images comprising one or more pixels and each pixel comprising a pixel value, the imaging system comprising:

- one or more illumination sources to illuminate the object with different directions of illumination, wherein each image is associated with a determined direction of illumination;

- an image capture device for obtaining pixel values of each pixel in each image of the plurality of images;

- a data processor for calculating at least one ratio of the pixel value of a selected pixel in a first image of said plurality of images to pixel values of at least one corresponding pixel selected in the remaining images of the plurality of images and for calculating a mean value of the ratio of the selected pixel to determine the requirement for pixel value correction of the pixel value of the selected pixel and to determine a corrected pixel value of the pixel value of the selected corresponding pixel, wherein the data processor replaces the pixel value of the selected pixel with the corrected pixel value to provide a corrected image.

**Brief Description of the Drawings**

Reference will now be made, by way of example, to the accompanying drawings, in which:

- Figure 1 shows a simplified diagram of an imaging system showing the various types of illumination directions used for an object, according to an embodiment of the present invention;
- Figure 2 shows a simplified diagram of the imaging system showing the modules of the imaging system, according to an embodiment of the present invention;
- Figures 3, 4, 5 and 6 show several images of a same object, each image comprising bright zones at different locations, according to an embodiment of the present invention;
- Figures 7, 8 and 9 show a representation of Figure 3 in Red/Green/Blue space, according to an embodiment of the present invention;
- Figure 10 shows a graph representing the ratios of pixel values of selected pixels of an image to other pixel values for corresponding pixels in other images for a specific color channel, according to an embodiment of the present invention;
- Figure 11 shows a representation of a sigmoid function for removing bright zones from an image, according to an embodiment of the present invention;
- Figure 12 shows a representation of a sigmoid function for simultaneously removing bright zones and dark zones from an image, according to an embodiment of the present invention;
- Figure 13 shows the flowchart of the method, according to one aspect of the present invention;
- Figures 14, 15, 16 and 17 show several corrected images of the same object of Figures 3, 4, 5 and 6, each bright zone being corrected, according to an embodiment of the present invention;
- Figures 18, 19 and 20 respectively show a representation of Figure 14 in Red/Green/Blue space, according to an embodiment of the present invention;
- Figure 21 shows a representation of an object comprising bright zones;
- Figure 22 shows a representation of a detail of the object shown in Figure 21 wherein a plurality of bright zones is represented;
- Figure 23 shows a representation of a corrected image of the detail shown in Figure 22;
- Figures 24, 25 and 26 show three different images of the same object wherein the object comprises specific bright and dark zones;
- Figures 27, 28 and 29 respectively relate to corrected images of Figures 24, 25 and 26 respectively according to an embodiment of the present invention.

**Detailed Description of the Invention**

The description below discloses the invention in a sufficiently clear and complete manner, based on specific examples. However, the description should not be understood as limiting the scope of the protection to the specific embodiments and examples described below.

In the description below, the term pixel value or pixel intensity value refers to the value of the intensity of a pixel in an image.

In the description below, the term "initial image" or "image" refers to various images of a same object wherein each image of the object corresponds to a specific illumination direction generated by one or more an illumination sources. The one or more illuminations sources may produce all RGB (Red, Green, and Blue) color channels. In addition, each image is taken with a fixed position camera at a determined location. The described embodiment comprises three images, i.e. images 1, 2 and 3 taken under different illumination directions with a camera having a fixed position. It should be understood that the present invention is also suitable for processing a plurality of N images. Each image comprises a plurality of M pixels and the three color channels in RGB space, i.e. red, green and blue. Calculations below only consider one pixel such as pixel1 in each image as an example. It is understood that calculations may also apply to the plurality of M pixels of an image.

The wording "incorrectly high", "incorrectly low" or "incorrect intensity" relate to pixel intensity value being respectively higher or lower than the intensity value of other pixels in the image.

In the description below, the wording "bright zone" may relate to a specular zone of an image, i.e. a zone of an image comprising a specularity. A bright zone may comprise one or more bright pixels having an incorrect intensity.

When considering a multiplicity of images and different bright zones in the images, a bright zone in an image should not completely overlap a bright zone in all other images.

In the description below, the wording "dark zone" may relate to a shadow zone in an image of an object, wherein the dark zone may comprise one or more dark pixels. A dark pixel has an incorrect intensity. When considering a multiplicity of images and different dark zones in the images, a dark zone in an image should not completely overlap a dark zone in all other images.

In addition, in the description below, the word "object" may relate to any object being illuminated with various directions of illumination and wherein images of the object are taken with a fixed position camera. The object may relate to one or more objects of small dimension such as micro-organisms or to objects of a greater dimension such as a bottle of water.

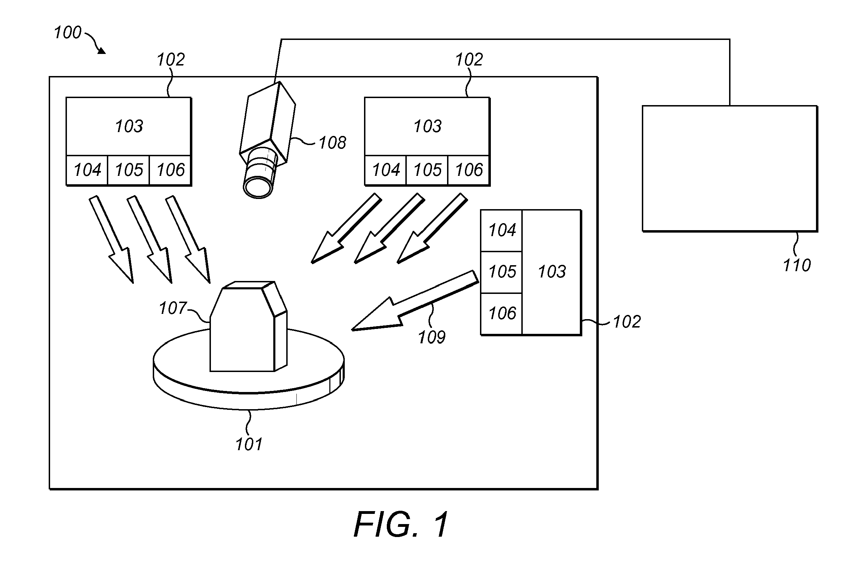

Figure 1 shows an imaging system 100 comprising one or more base units 102. Each base unit 102 includes the optics and control circuitry 103 for generating red (R), green (G), and blue illumination. Each base unit 102 comprises corresponding red, green, blue (B) illumination sources 104, 105, 106 which are all independently controllable. Illumination sources 104, 105, 106 may produce annular illumination, inverse annular illumination or lateral illumination, for example.

The imaging system 100 may optionally comprise a holding unit 101 for holding an object 107. Illumination sources 104, 105, 106 are located above the object.

Regarding the orientation of illumination sources 104, 105, 106, the optical axes of illumination sources 104, 105, 106 are arranged such that they apply illumination in a direction which may be non-perpendicular or perpendicular to the object 107. The imaging system 100 also includes an image capture device 108, such as a camera which is directed towards the holding unit 101. Illumination from any combination of illumination sources 104, 105, 106 from any of the base units 102 can be directed towards the object 107. The image capture device 108 may then capture images from any object 107 in the holding unit 106 which has been illuminated.

As shown in Figure 1, an annular beam 109 may also illuminate the object 107 and is produced by one of the base units 102.

The illumination sources 104, 105, 106 may be of any preferred type, such as light emitting diodes (LED) operating at red (R), green (G) and blue (B) frequencies; a simple white light source; a ultra-violet (UV) source or any other appropriate radiation source. The number of light sources in any location can vary from that shown and described herein. Each RGB illumination is made up of three LEDs operating at each respective frequency. For different illumination sources, there may be different combinations of RGB LEDs.

In addition to the control circuitry and optics 103 in each unit which controls the function thereof, there may be an overall control system 110 comprising at least a computer, a display unit, processing modules and image enhancing algorithms, image processing, and any other processes or techniques.

The control system 110 may be used to control which illumination sources are used for specific applications. In addition, the control system may apply different image enhancing techniques and image processing procedures for different applications. Image enhancing techniques are methods and techniques for enhancing the quality of an image or for making pertinent information visible for an expert to view in the biological domain, for example. Examples include: fusion of different images such as vertical fusion or fusion for hemolysis, edge lighting correction, exposure time correction, etc. Image processing is the extraction of information from images in order to provide decision support or enable automatic decisions.

The control system may be used to carry out any other function and/or control operation for the imaging system. These include, but are not limited to:

- controlling the level of luminance;
- controlling the balance of the red, green, blue components;
- controlling exposure time;
- controlling illumination combinations;
- testing the system;
- calibrating the system; and
- any other appropriate control based on the use and purpose of the analysis.

The aim of the present invention is to improve the quality of images by correcting pixel values of pixels corresponding to bright pixels, and more specifically to highlight pixels or specular pixels, i.e. pixels having an incorrectly high intensity compared to other pixel values of the same pixel in other images, and correcting pixel values relating to dark pixels, such as shadow pixels, i.e. pixels having an incorrectly low intensity compared to the other pixel values of the same pixel in other images.

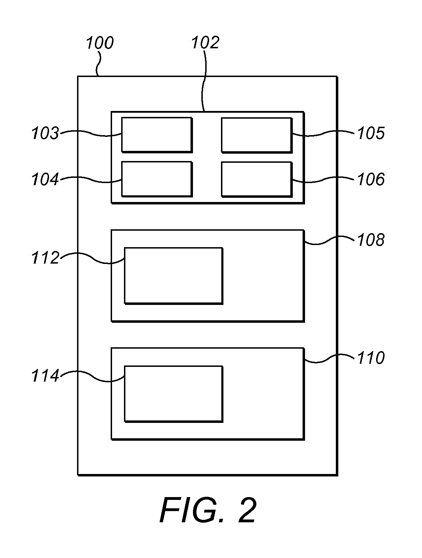

As shown in Figure 2, the image capture device 108 comprises an intensity detection device 112 for selecting each pixel in an image and determining the corresponding pixel value or intensity I of the pixel. The intensity detection device 112 detects the intensity of each pixel in a determined number of images and for each different color channel R, G, B.

In one embodiment, the intensity detection device 112 selects an image such as image 1. The intensity detection device 112 then selects a specific color channel, such as color channel R. The intensity detection device 112 detects the pixel value of each pixel in image 1 for color channel R. When considering specific examples of pixel 1 in image 1, the detected pixel values may refer to IR1 (pixel1).

The intensity detection device 112 proceeds in the same manner with color channels G and B for image 1. In a similar manner, the detected pixel values may refer, for example, to IG1 (pixel1) for color channel G and IB1 (pixel 1) for color channel B.

The intensity detection device 112 then carries out the same steps for images 2 and 3. The intensity detection device 112 always selects corresponding pixels in all other images to determine the corresponding intensity of the same pixel in all the different images. It should be understood that the wording "same pixel" means that the pixel is located at the same location in all images. Thus, pixel 1 in image 1 is located at the same place as pixel 1 in images 2 and 3.

The detected pixel values refer to the following notations, for example when considering pixel1:

- for image 2:

    IR2(pixel1)
    IG2(pixel1)
    IB2(pixel1);

- for image 3:

    IR3(pixel1)
    IG3(pixel1)
    IB3(pixel 1).

The intensity detection device 112 may store the detected intensities in a corresponding matrix such as matrix IR1 which represents all pixel values for image 1 and associated color channel R.

In a similar manner, the pixel values of all pixels of image 1 and associated with color channel G are organized in matrix IG1 and the pixel values of image 1 and related to color channel B are arranged in matrix IB1.

In the same manner that pixel values corresponding to pixels of image 1 are arranged in matrices IR1, IG1 and IB1, the detected pixel values of all pixels for all images are arranged in corresponding matrices which refer, for example, to:

    IR2, for color channel R and image 2
    IR3, for color channel R and image 3
    IG2, for color channel G and image 2
    IG3, for color channel G and image 3
    IB2, for color channel B and image 2
    IB3, for color channel B and image 3.

Due to the amount of pixel values gathered in the corresponding matrix, the intensity detection device 112 may process an unwrapping step to convert the matrix into a vector comprising a line of data and thus facilitate further calculations based on the pixel values.

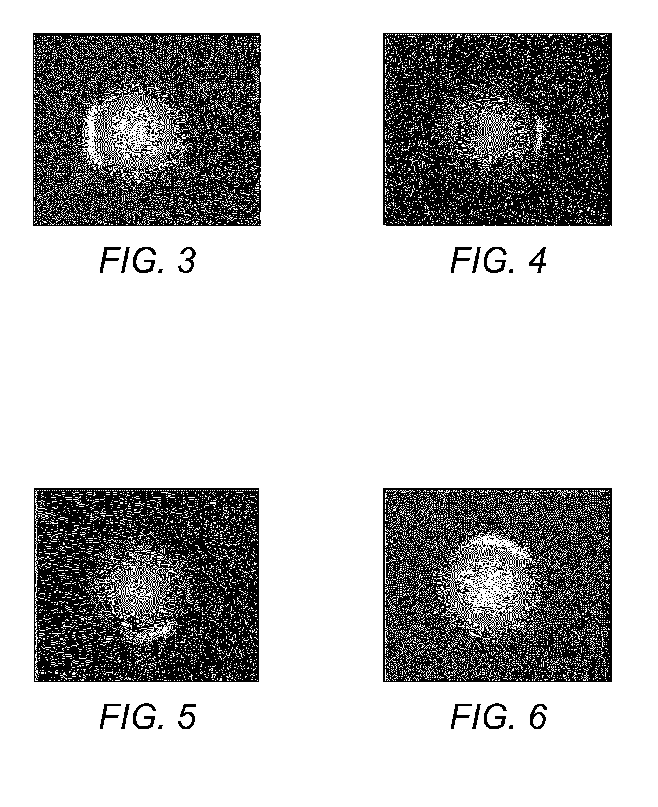

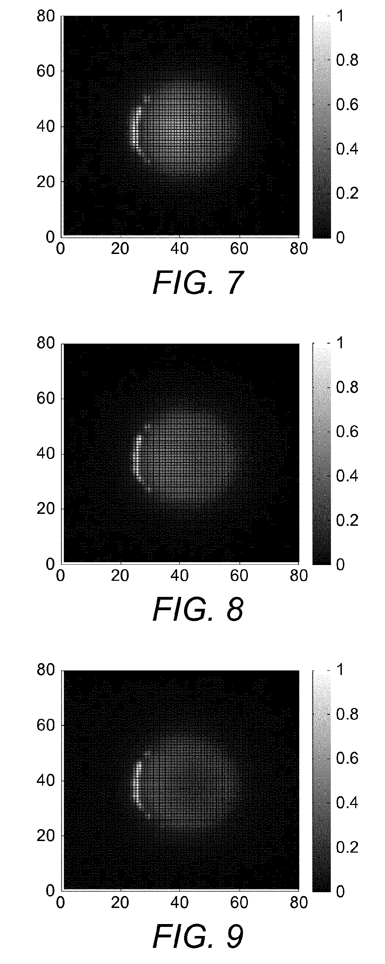

As shown in Figures 3, 4, 5 and 6, a bright zone may occur on a same object at different locations. Figure 3 shows a bright zone on the left side of the object. Figure 4 shows a bright zone on the right side of the object. Figure 4 shows a bright zone at the bottom of the object and Figure 6 shows a bright zone on the top of the object. A bright zone may also be considered in the RGB space. Figures 7, 8 and 9 refer to the red channel, green channel and blue channel respectively for the representation of the bright zone shown in Figure 3.

As shown in Figure 2, the control system 110 also comprises a data processor 114 to carry out specific calculations based on pixel values and on a determined mathematical formula.

The data processor 114 may calculate specific ratios relating to the comparison between pixel values of pixels in a specific image for different color channels and pixel values of corresponding pixels in other images for corresponding color channels based on the above matrices. A ratio of 1 corresponds to the comparison of pixel values of two pixels having the same pixel value. Thus, when the ratio differs from 1, the ratio determines a discrepancy between a first pixel value of a pixel in an image and a second pixel value of the same pixel in one or more other images. Indeed, if the ratio is higher than 1, this means that the pixel in question corresponds to a brighter pixel. For example, the ratio may be 1.20 representing an increase of 20% from the ratio equal to 1. If the ratio is lower than 1, this means that the pixel in question corresponds to a darker pixel.

For image 1:

A ratio comprises, for example, IR1/IR2 to determine the presence of a bright zone in image 1 associated with color channel 1 when compared with image 2 for the same color channel.

The resulting ratio values may, for example, be arranged in corresponding matrices of ratios as follows, wherein each vector relates to the ratios of all pixels of image 1, pixel by pixel, and wherein each column of the matrices corresponds to a specific pixel in the related image.

For image 1;

IR1_ratio = (IR1/IR2; IR1/IR3)

IR2_ratio = (IR2/IR1; IR2/IR3)

IR3_ratio = (IR3/IR1; IR3/IR2)

For image 2 and image 3;

The data processor 114 iteratively carries out similar ratio calculations to obtain similar ratio matrices for images 2 and 3, and respectively for other color channels G and B for each image 1, 2, and 3 and for each pixel in image 2 and image 3.

When considering a multiplicity of N images, the data processor 114 iteratively carries out such ratio calculations for all pixels of all N images for each color channel.

The data processor 114 may also calculate a weighting value W which is a mean value such as an average value of the calculated ratios based on the above obtained ratio matrices. The weighting value W is calculated for each pixel of each image and for each color channel.

The resulting weighting values W may be arranged in corresponding weighting matrices as follows when considering pixel 1 for example:

For color channel R:

WR1 = mean IR1_ratio for all the pixels in the image 1

WR2 = mean IR2_ratio for all the pixels in the image 2

WR3 = mean IR3_ratio for all the pixels in the image 3

Similar weight matrices are obtained for the color channels G and B.

When considering a multiplicity of N images, the data processor 114 iteratively carries out such weight matrix calculations for all pixels of all N images for each color channel.

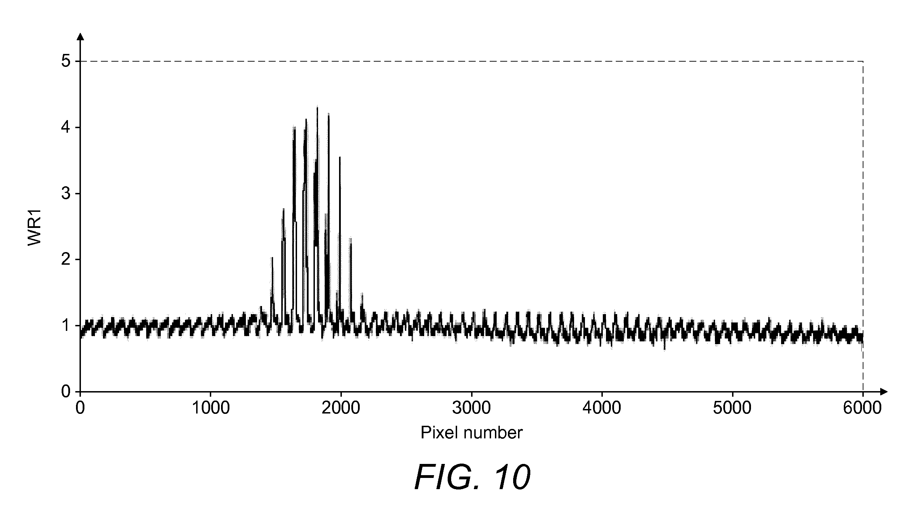

Figure 10 shows a representation of the ration WR1 for image 1 comprising 6000 pixels being identified with their respective location in image 1. Thus, high values of WR1 correspond to a bright zone located between pixel 1500 to pixel 2000.

The weighting value W is associated with a threshold value V equal to 1 to compare the weighting value W with the threshold value V to determine in which situation the image associated with the weighting value contains a bright zone.

When the weighting value W is equal to the threshold value 1, this means that the intensity value of the same pixel in the two considered images is the same.

When the weighting value W is greater than the threshold value 1, the related image comprises at least one bright zone made of a bright pixel corresponding to a specular pixel.

When the weighting value W is lower than 1, this means that the related image does not comprise any specular pixel.

When the weighting value W approaches the value 0, this means that the related image comprises at least one dark pixel corresponding to a dark zone.

The weighting value W may be associated with a specific margin value Vm, such as Vm_high for bright zones and Vm_low for dark zones to define two corresponding threshold intervals. Such threshold intervals enable specific bright zones and dark zones that may not be related to a specular zone or a shadow zone to be kept in the image. Indeed, such specific bright zones and dark zones may arise due to the interaction of illumination sources with the object caused by specific directions of illumination or the specific nature of the object, for example. Thus, when considering the threshold intervals, such specific zones are not considered as bright zones or dark zones to be corrected with the method of the present invention and remain unchanged in the image. Values of Vm_high and Vm_low are defined values such as Vm_high equals 0.2 and Vm_low equals 0.8.

The first threshold interval relates to the higher values of W that approach the value of 1 and indicate the absence of bright pixels. Based on the value of the margin value Vm_high, the first threshold interval relates to values of V from 1 to V_high, where V_high corresponds to predetermined values of V for bright pixels. In the present example, where Vm_high equals 0.2, the first threshold interval corresponds to values of V from 1 to 1+Vm_high, i.e. 1.2. Thus, when weighting values W are not equal to 1 and are included in the first threshold interval, this implies that related pixels are not considered as comprising any bright pixels corresponding to specular pixels. Thus, pixel values with a high intensity which may be generated by an effect of light due, for example, to the specific nature of the object are considered for pixel correction but remain unchanged after pixel value correction.

The second threshold interval relates to the higher values of W that approach the value of 0 and indicate the presence of dark pixels. Based on the value of the margin value Vm_low, the second threshold interval corresponds to values of V from V_low to 1, where V_low corresponds to predetermined values of V for dark pixels. In the present example where Vm_low equals 0.8, the second threshold interval corresponds to values of V from 1 to 1-Vm_low i.e. 0.2. Thus, when weighting values W are not equal to 1 and are included in the second threshold interval, this implies that related pixels are not considered as comprising any dark pixels corresponding to a dark zone. Thus, pixel values with a low intensity which may be generated by an effect of light due, for example, to the specific nature of the object or the Petri dish material, are considered for pixel value correction but remain unchanged after pixel correction.

The data processor 114 may compute a determined formula based on the above ratios, weighting values W and threshold values V to provide corrected pixel values or corrected intensities Ic to replace a determined pixel value I of a pixel under consideration, the formula may for example take the following form:

$$Ic = \frac{I}{W_{imagenumber}^{f(W_{imagenumber})}}$$

$$Ic(im\_number, p\_number) = \frac{I(im\_number, p\_number)}{W_{im\_number, p\_number}^{f(W_{im\_number, p\_number})}}$$

where:

$im\_number$ is a corrected image from the plurality of N images;
$p\_number$ is a corrected pixel; and
f(W) is a function such as a sigmoid function below:

$$f(W_{im\_number, p\_number}) = \frac{k}{1 + e^{-\alpha*(W_{im\_number, p\_number} - V)}}$$

In the above formula, k is a predetermined coefficient for modulating the level of correction to modulate distortion caused by the pixel in question on the corrected image of the object; the values of k are higher than 0 and lower than 1. Predetermined values of k for bright pixels and dark pixels may respectively refer to k_high and k_low such as 0.75 for example.

Based on the above formula, when the weighting value W is relatively higher than the threshold value V, the function f(W) approaches the value of k which provides a strict correction of the related pixel value.

In a similar manner, when the weighting value W is relatively lower than the threshold value V, the function f(W) approaches the value 0 which also provides a strict correction of the related pixel value.

Strict correction means that the corrected pixel values on the image provide visible transition between corrected pixels and non-corrected pixels on an image.

Thus, in the above formula, $\alpha$ is a parameter defining the sharpness of transition of the sigmoid function. This means $\alpha$ may vary to modulate the correction to smooth the visible transition between corrected zones and non-corrected zones of an object in an image. The smoothing of the transition improves the visible effect of the correction on the image and also improves the quality of the image for the further photometric stereo processing for object surface reconstruction. Predetermined values of $\alpha$ for bright pixels and dark pixels may respectively be referred to as $\alpha$_high and $\alpha$_low.

Based on the above distinctions for the parameters $\alpha$, k and V, the above general formula of f(W) may now be written as follows:

$$f(W) = \frac{k\_high}{1 + e^{-\alpha\_high(W-V\_high)}} - \frac{k\_low}{1 + e^{-\alpha\_low(W-V\_low)}} + k\_low$$

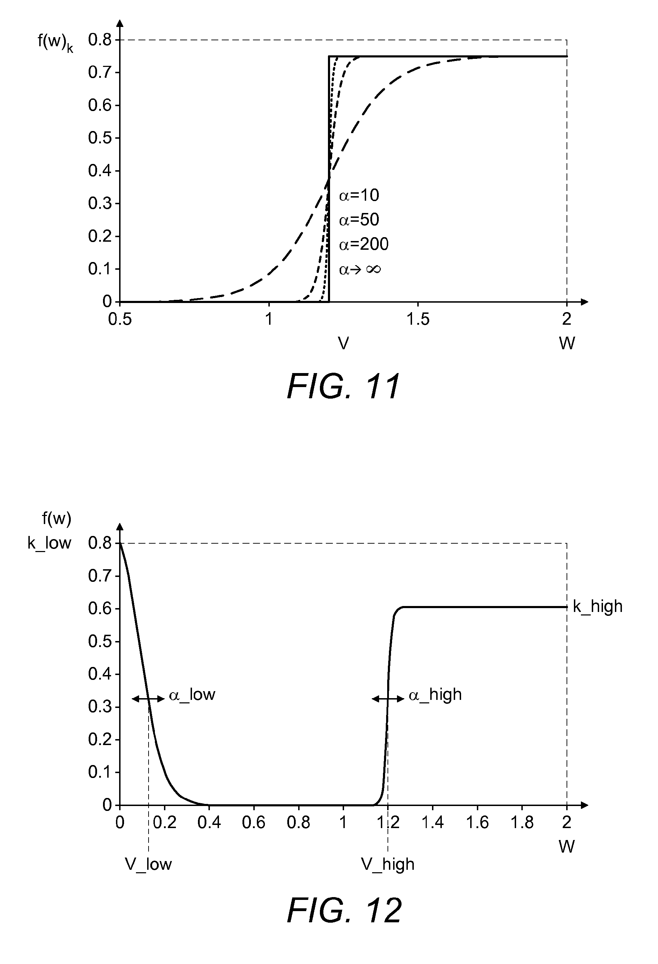

Figure 11 shows a representation of f(W) relating to different values of $\alpha$ and only associated with bright zones.

Figure 12 shows a representation of f(W) with different values of $\alpha$ and k associated with bright zones and dark zones, where $\alpha$_high= 100 and $\alpha$_low=50 and k_high=0.6 and k_low=0.8.

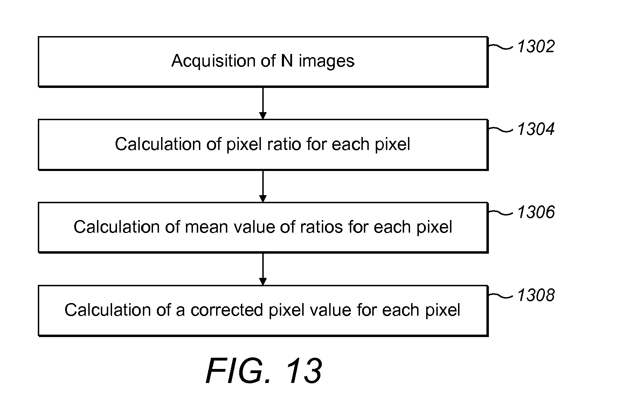

As shown in Figure 13, the method of the present invention comprises several steps, 1302, 1304, 1306, and 1308, as described below. The method comprises step 1302 for the image capture device 108 to acquire a plurality of N images. In the described embodiment, at least two images have to be taken with different illumination directions by different illumination sources.

In step 1302, the intensity detection device 112 considers each different image 1, 2 and 3 and detects the intensity of each pixel for each color channel to obtain the pixel values IR for each pixel, for each image and for each color channel.

In a step 1304, the data processor 114 calculates for a same pixel the ratio between the intensity of the pixel under consideration in an image and the intensity of the corresponding pixel in other images, for a same color channel to obtain the corresponding ratio values.

In a step 1306, the data processor 114 calculates the corresponding mean value of each calculated ratio for each pixel, for each image and each color channel.

In a step 1308, the data processor 114 calculates a corrected pixel value Ic based on the above formula, for each pixel in each image and for each color channel.

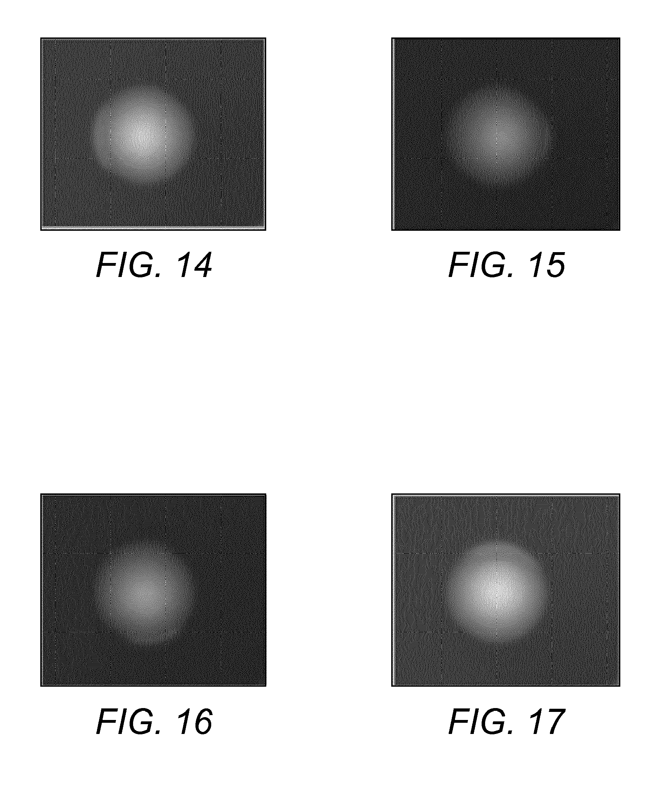

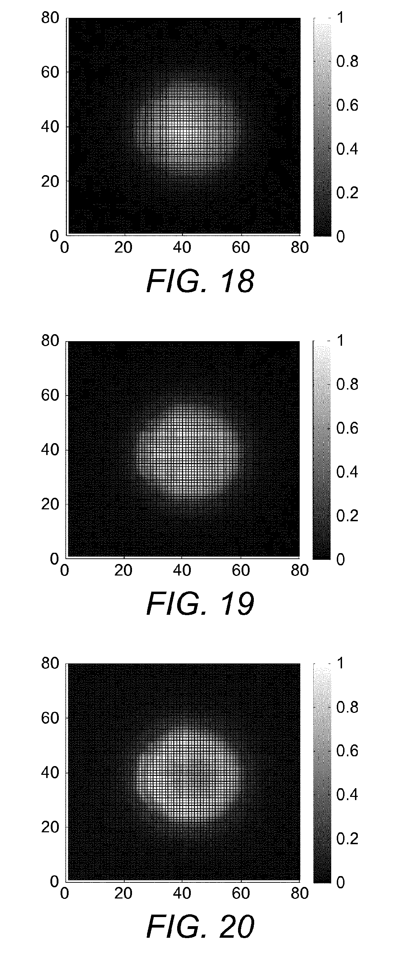

Figures 14, 15, 16 and 17 respectively show a corrected image of the object of Figure 3, Figure 4, Figure 5 and Figure 6 where the bright zone has been corrected in each image. Figures 18, 19 and 20 show the corrected image of Figure 14 in the red, green and blue channels respectively.

An example of the present invention is described below. Fourteen initial images comprising objects are considered. Some initial images comprise objects wherein parts of objects are hidden due to the presence of bright zones and dark zones in some images. The above parameters k_high, k_low, V_high, V_low and $\alpha$_high and $\alpha$_low may be determined as indicated below:

k_high= k_low= 0.75
V_high= 1.2 and V_low=0.2
$\alpha$_high= 100 and $\alpha$_low=50.

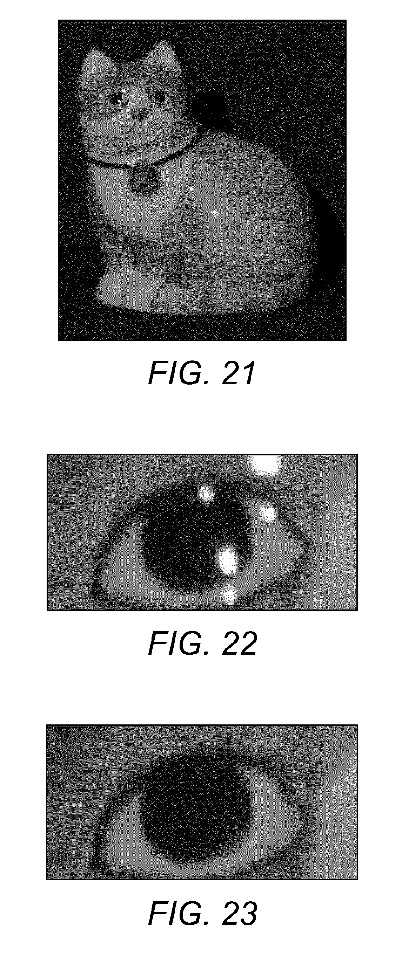

The figures 21 to 22 and 24 to 26 refer to images which are stored in a public database as mentioned in A. Hertzmann, S. M.Seitz, "Example-Based Photometric Stereo: Shape Reconstruction with General Varying BRDF", IEEE Transactions on pattern analysis and machine intelligence, vol27, 8, p.1254-1263, 2005.

Figure 21 shows an image of an object representing a cat with a plurality of bright zones.

Figure 22 indicates specific bright zones located around and inside the eye of the cat. After processing the image shown in Figure 22 with the method of the present invention, a corrected image as shown in Figure 23 is obtained. A visual check indicates that bright zones present in the image shown in Figure 22 do not appear in the image shown in Figure 23. In addition, a further visual check indicates that the details of Figure 22 representing the eye of the cat have not been impacted after applying the method according to the invention.

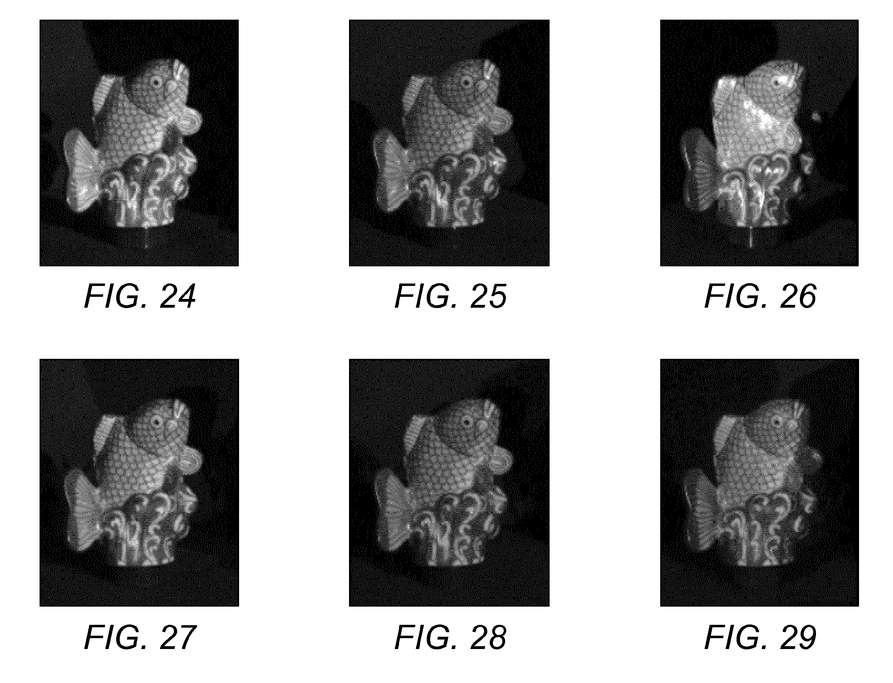

In other examples shown in Figures 24, 25 and 26, a plurality of bright zones and dark zones can be observed in these figures. As shown in Figures 27, 28 and 29, dark and bright zones have been removed after applying the method according to the invention. In addition, a visual check indicates that the details of the object have not been impacted after applying the method according to the invention.

These values of the parameters $\alpha$, k and V are empirically determined based on the calculated mean value of the ratios.

Alternatively, instead of determining specific values for the above parameters, an automatic system for adapting the values of the parameters may be implemented.

The present invention provides a solution for replacing all pixel values of images being processed. The present invention provides simultaneous correction of pixel values of specific zones or image regions comprising bright pixels such as specular pixels and dark pixels such as shadow pixels. The invention provides a solution for correcting corresponding pixel values in such zones without requiring predetermined information regarding the illumination directions and/or locations of illumination sources. The invention provides a method based on a multiplicity of images by sequentially considering all pixels in all images. This implies that the pixel information from all images is used to provide correction to any pixel being associated with a specular pixel or shadow pixel. The invention allows pixel values of specific zones comprising specific information associated with the image regarding a specific illumination direction to remain unchanged. Indeed, each pixel value of such specific zones is processed and replaced with the same pixel value as no different pixel value is needed for this pixel value. Pixel values of the specific zones may relate to shading information of the related image. Thus, in the present invention, all pixels in the images are taken into consideration and merged to provide replacement and also correction of pixel values. This aspect allows the orientation of the surface of the object to be reliably estimated when processing the photometric stereo method, for example, in a further step of the method. The processing of the further photometric stereo method is also improved as the present invention provides a multiplicity of corrected images based on the multiplicity of initial images. In a specific embodiment, two images of the object are needed to correct pixel values of only one image of the object.

In addition, the present invention is adapted for restoring highlighted and shadowed zones of images even when considering zones of substantial size comprising complex pixel texture.

In order to optimize the solution of the present invention, a high number of images may be used and a high number of illumination sources may be evenly located around the object. Thus, an increased amount of information related to pixel values of the object can be considered. As a result, the correction of pixel values may be improved. Furthermore, to optimize the correction of pixel values, a zone of interest does not have to totally overlap another zone of interest in all other images.

**Claims**

1. A method for correcting one or more images of an object (107) from a plurality of images of the object (107), for providing one or more corrected images of the object (107) for further use in a process for generating a representation of the surface of the object, each image of the plurality of images comprising one or more pixels and each pixel comprising a pixel value, wherein one or more illumination sources (104, 105, 106) illuminate the object with different directions of illumination, and each image is associated with a determined direction of illumination, the method comprising the steps of:

    for each pixel of the plurality of a first image of said plurality of images:

        a) selecting a pixel in the first image for obtaining the pixel value of the selected pixel;
        b) selecting at least one corresponding pixel in at least one image of the remaining images of the plurality of images for obtaining the pixel value of the at least one selected corresponding pixel;
        c) calculating at least one ratio of the pixel value of the selected pixel in the first image to each pixel value of the at least one selected corresponding pixel;
        d) determining a requirement for pixel value correction of the selected pixel on the basis of the at least one calculated ratio;
        e) calculating a value (W) based on the at least one calculated ratio to determine a corrected pixel value of the selected pixel;
        f) replacing the pixel value of the selected pixel with the corrected pixel value in the first image to provide a corrected first image;

2. The method as claimed in claim 1, further comprising the step of:

        g) repeating steps a), b), c), d), e) and f) for at least one image of the remaining non-corrected images to provide at least one further corrected image.

3. The method as claimed in claim 2, wherein the step of determining a corrected pixel value further comprises applying a determined mathematical formula which comprises a sigmoid function.

4. The method as claimed in claim 3 wherein the mathematical formula comprises a parameter determining the required level of pixel value correction.

5. The method as claimed in claim 3 or 4, wherein the mathematical formula comprises a parameter determining the sharpness of transition of the sigmoid function.

6. The method as claimed in any of claims 3 to 5, wherein the mathematical formula comprises a parameter for adapting the level of pixel value correction.

7. The method as claimed in any preceding claim, wherein the plurality of images comprises different types of zones such as bright zones and/or dark zones.

8. The method as claimed in claim 7, wherein the selected pixel is associated with a bright zone of an image.

9. The method as claimed in claim 7, wherein the selected pixel is associated with a dark zone of an image.

10. The method as claimed in any of claims 7 to 9, wherein the step of determining a corrected pixel value depends on the type of zone associated with the selected pixel.

11. The method as claimed in any preceding claim, wherein each of the one or more initial images comprises the three color channels Red, Green, Blue and wherein steps a), b), c), d) and e) are iteratively carried out for each pixel, for each image and for each color channel.

12. A computer program product comprising stored computer-executable instructions which, when executed by a computer system, implement the method of any of claims 1 to 11.

13. An imaging system (100) for correcting a plurality of images of an object (107) to provide corrected images of the object for further use in a process for generating a representation of the object (107), each image of the plurality of images comprising one or more pixels and each pixel comprising a pixel value, the imaging system (100) comprising:

- one or more illumination sources to illuminate the object with different directions of illumination, wherein each image is associated with a determined direction of illumination;
- an image capture device (108) for obtaining pixel values of each pixel in each image of the plurality of images;
- a data processor (114) for calculating at least one ratio of the pixel value of a selected pixel in a first image of said plurality of images to pixel values of at least one corresponding pixel selected in the remaining images of the plurality of images and for calculating a mean value of the ratio of the selected pixel to determine the requirement for pixel value correction of the pixel value of the selected pixel and to determine a corrected pixel value of the pixel value of the selected corresponding pixel, wherein the data processor (114) replaces the pixel value of the selected pixel with the corrected pixel value to provide a corrected image.

**FIG. 1**

EP 2 806 394 A1

FIG. 2

FIG. 3

FIG. 4

FIG. 5

FIG. 6

FIG. 7

FIG. 8

FIG. 9

*FIG. 10*

FIG. 11

FIG. 12

| Acquisition of N images | ~ 1302 |

| Calculation of pixel ratio for each pixel | ~ 1304 |

| Calculation of mean value of ratios for each pixel | ~ 1306 |

| Calculation of a corrected pixel value for each pixel | ~ 1308 |

## FIG. 13

FIG. 14

FIG. 15

FIG. 16

FIG. 17

FIG. 18

FIG. 19

FIG. 20

FIG. 21

FIG. 22

FIG. 23

FIG. 26

FIG. 29

FIG. 25

FIG. 28

FIG. 24

FIG. 27

# EUROPEAN SEARCH REPORT

Application Number

EP 13 30 5673

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 088 612 A (BLAIR KERRY L [US]) 11 July 2000 (2000-07-11) | 1,2, 7-10,12, 13 | INV. G06T5/00 G06T5/50 |
| A | * abstract * * column 2, line 21 - line 47 * * column 10, line 29 - column 11, line 20 * * column 12, line 54 - line 60 * * figure 21 * ----- | 3-6,11 | |
| A | WO 99/38121 A1 (SENSAR INC [US]; SARNOFF CORP [US]) 29 July 1999 (1999-07-29) * abstract * * page 6, paragraph 2 - page 7, paragraph 1 * ----- | 1,12,13 | |
| A | FERIS R ET AL: "Specular reflection reduction with multi-flash imaging", COMPUTER GRAPHICS AND IMAGE PROCESSING, 2004. PROCEEDINGS. 17TH BRAZIL IAN SYMPOSIUM ON CURITIBA, PR, BRAZIL 17-20 OCT. 2004, PISCATAWAY, NJ, USA,IEEE, 17 October 2004 (2004-10-17), pages 316-321, XP010737757, DOI: 10.1109/SIBGRA.2004.1352976 ISBN: 978-0-7695-2227-2 * abstract * * page 4, right-hand column, paragraph 5 * ----- -/-- | 1,12,13 | TECHNICAL FIELDS SEARCHED (IPC) G06T |

The present search report has been drawn up for all claims

| Place of search | Date of completion of the search | Examiner |
|---|---|---|
| Munich | 27 September 2013 | Engels, Angela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 13 30 5673

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ARGYRIOU V ET AL: "Photometric stereo with an arbitrary number of illuminants", COMPUTER VISION AND IMAGE UNDERSTANDING, ACADEMIC PRESS, US, vol. 114, no. 8, 1 August 2010 (2010-08-01), pages 887-900, XP027112696, ISSN: 1077-3142 [retrieved on 2010-05-24] * abstract * * section 2 * | 1,12,13 | |

TECHNICAL FIELDS
SEARCHED       (IPC)

The present search report has been drawn up for all claims

| Place of search | Date of completion of the search | Examiner |
|---|---|---|
| Munich | 27 September 2013 | Engels, Angela |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

# EP 2 806 394 A1

**ANNEX TO THE EUROPEAN SEARCH REPORT
ON EUROPEAN PATENT APPLICATION NO.**

EP 13 30 5673

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2013

| Patent document cited in search report | Publication date | Patent family member(s) | Publication date |
|---|---|---|---|
| US 6088612 A | 11-07-2000 | NONE | |
| WO 9938121 A1 | 29-07-1999 | AU 2341199 A | 09-08-1999 |
| | | EP 1050019 A1 | 08-11-2000 |
| | | JP 2002501265 A | 15-01-2002 |
| | | US 6088470 A | 11-07-2000 |
| | | WO 9938121 A1 | 29-07-1999 |

EPO FORM P0459

For more details about this annex : see Official Journal of the European Patent Office, No. 12/82

25

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2520923 A

**Non-patent literature cited in the description**

- **A. HERTZMANN ; S. M.SEITZ.** Example-Based Photometric Stereo: Shape Reconstruction with General Varying BRDF. *IEEE Transactions on pattern analysis and machine intelligence,* 2005, vol. 27 (8), 1254-1263